# FASCICULE DE BREVET EUROPEEN

(11) **EP 2 318 747 B1**
(45) Date de publication et mention de la délivrance du brevet: **28.10.2015**
(21) Numéro de dépôt: 09737022.5
(22) Date de dépôt: 20.08.2009
(51) Int. Cl.: F16L 37/248

(54) **RACCORD EN DEUX PARTIES RELIÉES PAR BAÏONNETTE, PROCÉDÉ DE RENFORCEMENT DE LA LIAISON DE PARTIES DE CORPS D' UN TEL RACCORD**
DURCH EINEN BAJONETTVERBINDER VERBUNDENE, IN ZWEI TEILEN HERGESTELLTE VERBINDUNG, VERFAHREN ZUR VERSTÄRKUNG DER KOPPLUNG VON KÖRPERTEILEN SOLCH EINER VERBINDUNG
CONNECTION MADE IN TWO PARTS CONNECTED BY A BAYONET FITTING, METHOD OF STRENGTHENING THE COUPLING OF BODY PARTS OF SUCH A CONNECTION

(30) Priorité: 20.08.2008 FR 0804650
(43) Date de publication de la demande: 11.05.2011
(73) Titulaire: PARKER HANNIFIN MANUFACTURING France SAS, 74100 Ville-la-Grand (FR)
(72) Inventeur: BLIVET , Philippe, F-35200 Rennes (FR)
(74) Mandataire: Lavialle, Bruno François Stéphane
(86) Numéro de dépôt international: PCT/FR2009/001018
(87) Numéro de publication internationale: WO 2010/020722

(56) Documents cités:
- CH-A- 405 839
- GB-A- 2 223 814
- US-A- 4 449 737
- US-A1- 2008 093 846
- US-B2- 6 422 205

## Description

La présente invention concerne un raccord utilisable pour relier deux conduits l'un à l'autre, comme par exemple des canalisations entre elles ou une canalisation à un organe émetteur ou récepteur de fluide comme une pompe, un distributeur, un actionneur, un régulateur de débit ou de pression, un réservoir... L'invention a également pour objet une partie de corps d'un tel raccord et un procédé de renforcement d'une liaison à baïonnette solidarisant deux parties de corps d'un raccord.

### ARRIERE PLAN DE L'INVENTION

Il est connu des raccords comprenant un corps délimitant un canal interne et comportant deux parties de corps pourvues chacune de moyens de connexion du canal à un conduit, comme par exemple CH 405 839 A, ou US 4 449 737 A.

Les moyens de connexions peuvent être de plusieurs types et comprennent par exemple une section tubulaire mâle à dents de sapin ou en tétine destinée à être engagée à force dans le conduit ou une section tubulaire femelle pourvue d'une rondelle dentée ou d'une pince d'accrochage instantané du conduit... Le corps est généralement réalisé d'une seule pièce par moulage mais ceci interdit une quelconque modularité du raccord pour en simplifier la fabrication. Il faut en effet prévoir plusieurs moules pour fabriquer les corps associant les différents types de connexion utilisés.

On connaît par ailleurs des raccords dont le corps est réalisé en deux parties indépendantes. Les parties de corps comprennent alors des portions d'extrémité agencées pour permettre un engagement relatif solidarisant la première partie à la deuxième partie. Les portions d'extrémité comprennent des moyens de leur retenue mutuelle comme des moyens d'encliquetage ou de clipsage selon une direction axiale d'engagement. Or, la plupart des efforts qui s'exercent extérieurement sur un tel raccord ont une composante axiale. Il en résulte que la résistance de la liaison des parties de corps l'une à l'autre est relativement faible.

### OBJET DE L'INVENTION

Un but de l'invention est de fournir une alternative aux modes de liaison des parties de corps entre elles.

### RESUME DE L'INVENTION

A cet effet, on prévoit, un raccord comprenant un corps tubulaire délimitant un canal interne et comportant une première partie et une deuxième partie pourvues chacune de moyens de connexion d'un conduit au corps, la première partie et la deuxième partie comportant des portions d'extrémité agencées pour permettre un engagement relatif solidarisant la première partie à la deuxième partie, caractérisé en ce que les portions d'extrémité sont pourvues d'éléments de fixation agencés pour définir une liaison baïonnette irréversible, la portion d'extrémité de la première partie comportant au moins un ergot en saillie radiale et la portion d'extrémité de la deuxième partie comportant au moins une rainure de réception de l'ergot comportant un tronçon d'entrée débouchant dans un tronçon borgne s'étendant selon une direction sensiblement circonférentielle du raccord, la rainure comportant un élément de paroi mobile entre une position escamotée de la rainure pour laisser passer l'ergot du tronçon d'entrée au tronçon borgne et une position en saillie dans la rainure pour empêcher l'ergot de sortir du tronçon borgne, le raccord comportant des moyens de maintien de l'élément de paroi en position en saillie.

Les éléments de fixation qui définissent une liaison à baïonnette coopèrent entre eux par des appuis francs dans la direction axiale conférant au raccord une résistance relativement importante aux efforts exercés dans cette direction. En outre, les éléments de fixation s'opposent également au dégagement des parties de corps en cas de pivotement relatif de celles-ci en assurant l'irréversibilité de la liaison à baïonnette.

L'élément de paroi mobile assure de manière simple l'irréversibilité de la liaison à baïonnette.

Avantageusement, les moyens de maintien comprennent un moyen de rappel élastique de l'élément de paroi dans sa position en saillie et, de préférence, l'élément de paroi est élastiquement déformable de sa position en saillie vers sa position escamotée.

Le passage de la position escamotée à la position en saillie est ainsi instantané. En outre, l'utilisation d'un élément de paroi élastiquement déformable permet de réaliser l'irréversibilité et le rappel élastique sans recourir à des éléments rapportés, ce qui limite les coûts de montage et permet de conserver un raccord relativement léger.

Avantageusement, la portion d'extrémité de la première partie est une partie mâle et l'ergot s'étend radialement en saillie externe de cette portion d'extrémité et la portion d'extrémité de la deuxième partie comporte une paroi délimitant un logement de réception de la portion d'extrémité de la première partie, la rainure étant formée dans ladite paroi du logement, le tronçon d'entrée s'étendant selon une direction sensiblement axiale du logement et ayant une extrémité débouchant sur une face terminale de la deuxième partie et une extrémité opposée débouchant dans le tronçon borgne et, de préférence, la rainure comporte une paroi de fond formant l'élément de paroi mobile, la paroi de fond étant élastiquement déformable de sa position en saillie vers sa position escamotée.

Le raccord selon ce mode de réalisation est facilement réalisable.

De préférence encore, la paroi de fond formant l'élément de paroi mobile possède une extrémité fixe dans le tronçon d'entrée et une extrémité libre voisine du tronçon borgne et, avantageusement, l'ergot et l'extrémité libre de la paroi de fond formant élément de paroi mobile ont des formes complémentaires agencées de telle manière qu'un effort de l'ergot sur l'extrémité libre en direction du tronçon d'entrée tend à maintenir la paroi de fond formant élément de paroi mobile en position en saillie.

Si l'ergot est appliqué contre l'extrémité libre de l'élément de paroi mobile, il tend à maintenir celui-ci dans sa position en saillie.

Avantageusement encore, les portions d'extrémité comportent respectivement plusieurs ergots et plusieurs rainures, les ergots et les rainures étant disposés symétriquement pour autoriser plusieurs positions angulaires d'engagement relatif des parties de corps.

Ceci est particulièrement intéressant lorsque l'une des deux parties de corps n'est pas symétrique et est par exemple coudée, le coude pouvant être orienté de différentes façons de manière à faciliter l'implantation du raccord dans un circuit en adaptant sa géométrie à son environnement.

L'invention a également pour objet une partie de corps d'un tel raccord. Cette partie de corps comporte une portion d'extrémité ayant au moins une rainure de réception d'un ergot, la rainure comportant un tronçon d'entrée débouchant dans un tronçon borgne en faisant un angle avec celui-ci et un élément de paroi mobile entre une position escamotée de la rainure pour laisser passer l'ergot du tronçon d'entrée au tronçon borgne et une position en saillie dans la rainure pour empêcher l'ergot de sortir du tronçon borgne, le raccord comportant des moyens de maintien de l'élément de paroi en position en saillie.

L'invention concerne en outre un procédé de renforcement de la liaison de deux parties de corps d'un corps tubulaire d'un raccord, le corps délimitant un canal interne et les parties étant pourvues chacune de moyens de connexion du canal à un conduit et comportant des portions d'extrémité agencées pour permettre un engagement relatif solidarisant la première partie à la deuxième partie, les portions d'extrémité étant pourvues d'éléments de fixation comportant respectivement au moins un ergot en saillie radiale et au moins une rainure pour recevoir l'ergot, la rainure comportant un tronçon d'entrée débouchant dans un tronçon borgne s'étendant selon une direction sensiblement circonférentielle du raccord, le procédé comprenant l'étape de déformer plastiquement l'un au moins des éléments de fixation pour bloquer l'ergot dans le tronçon borgne, la rainure comportant un élément de paroi mobile entre une position escamotée de la rainure pour laisser passer l'ergot du tronçon d'entrée au tronçon borgne et une position en saillie dans la rainure pour empêcher l'ergot de sortir du tronçon borgne, la déformation est réalisée pour s'opposer à un déplacement de l'élément de paroi mobile de sa position en saillie vers sa position escamotée, sur l'élément de paroi mobile, ou sur l'ergot.

La déformation plastique a pour fonction d'augmenter la résistance au déplacement de l'ergot vers le tronçon d'entrée de la rainure en agissant sur l'ergot lui-même ou sur l'élément de paroi mobile.

D'autre caractéristiques et avantages de l'invention ressortiront à la lecture de la description qui suit de modes de mise en oeuvre particuliers non limitatifs de l'invention.

### BREVE DESCRIPTION DES DESSINS

Il sera fait référence aux dessins annexés, parmi lesquels :
- la figure 1 est une vue en perspective partiellement éclatée d'un raccord conforme à l'invention,
- la figure 2 est une vue de ce raccord en coupe longitudinale selon le plan II de la figure 1,
- la figure 3 est une vue de ce raccord en coupe transversale selon la ligne III-III de la figure 2,
- la figure 4 est une vue analogue à la figure 3 lors de l'assemblage du raccord, au cours de l'engagement relatif des deux parties de corps,
- la figure 5 est une vue analogue à la figure 2 d'un raccord selon une première variante de réalisation, l'une des parties de corps étant coudée,
- la figure 6 est une vue analogue à la figure 2 d'un raccord selon une deuxième variante de réalisation, les éléments de fixation coopérant de manière renforcée pour augmenter la résistance de la liaison à baïonnette,
- la figure 7 est une vue en section analogue à la figure 3 illustrant un premier mode de mise en oeuvre du procédé selon l'invention,
- la figure 8 est une vue analogue à la figure 7 illustrant un deuxième mode de mise en oeuvre du procédé de l'invention.

### DESCRIPTION DETAILLEE DE L'INVENTION

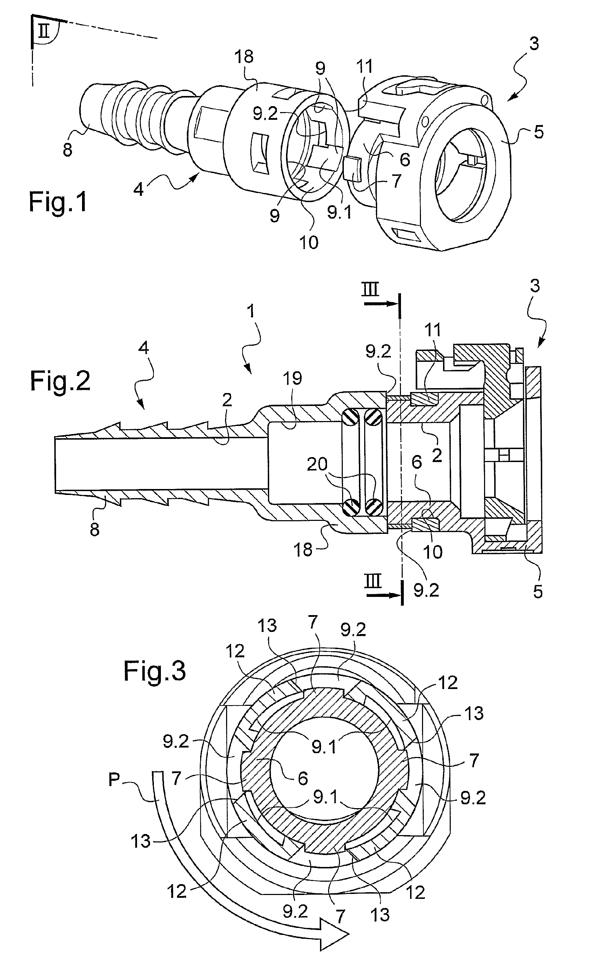

En référence aux figures 1 à 4, le raccord conforme à l'invention comprend un corps généralement désigné en 1, tubulaire, qui délimite un canal interne 2 et qui est agencé pour relier le canal interne 2 à deux conduits appartenant par exemple à des organes d'un circuit de fluide, comme des canalisations, un distributeur, un actionneur, un réservoir...

Le corps 1 comporte une première partie de corps et une deuxième partie de corps portant respectivement la référence générale 3, 4. La première partie de corps 3 et la deuxième partie de corps 4 délimitent ainsi chacune un tronçon du canal interne 2.

La première partie de corps 3 possède une première portion d'extrémité 5 agencée en portion femelle de connexion à une extrémité d'un des conduits pour relier ledit conduit au canal interne 2, et une portion d'extrémité 6 agencée en portion mâle de liaison à la deuxième partie de corps. La portion d'extrémité 5 comprend un chambrage ménagé à une extrémité du canal interne 2 et pourvu de moyens de connexion connus en eux-mêmes et comportant ici un verrou mobile radialement pour coopérer avec un relief externe de l'extrémité de conduit. La portion d'extrémité 6 est pourvue de quatre ergots 7, en saillie radiale vers l'extérieur et disposés symétriquement à 90° les uns des autres.

La deuxième partie de corps 4 possède une première portion d'extrémité 8 agencée en portion mâle de connexion à une extrémité de l'autre des conduits pour relier ledit conduit au canal interne 2, et une portion d'extrémité 18 agencée en portion femelle de liaison à la première partie de corps 3. La portion d'extrémité 8 est pourvue de moyens de connexion, à savoir ici de dents de sapin en saillie externe, et est agencée pour être engagée à force dans ladite extrémité dudit conduit. La portion d'extrémité 18 est pourvue d'un alésage 19 de plus grand diamètre que le canal interne 2 (le diamètre du chambrage 19 est égal au diamètre externe du conduit) et ayant à l'opposé de la portion d'extrémité 8 une extrémité pourvue d'un chambrage 10 de réception de la portion d'extrémité 6. L'alésage 19 reçoit du côté de la portion d'extrémité 8 des éléments d'étanchéité 20 destinés à enserrer l'extrémité de conduit qui sera retenue par les moyens de connexion de la partie de corps 3. Le chambrage 10 est pourvu intérieurement de quatre rainures 9 disposées symétriquement à 90° les unes des autres pour recevoir à coulissement les ergots 7. Chaque rainure 9 comprend un tronçon d'entrée 9.1 s'étendant axialement en ayant une extrémité débouchant sur une face terminale 11 de la portion d'extrémité 8 et une extrémité opposée débouchant dans un tronçon borgne 9.2 s'étendant selon une direction circonférentielle du chambrage 10. Chaque rainure 9 possède un élément de paroi de fond 12 ayant une extrémité solidaire de la paroi du chambrage 10 et, à l'opposé, une extrémité libre 13. L'élément de paroi de fond 12 s'étend dans le tronçon d'entrée 9.1 selon une direction circonférentielle du chambrage 10 pour avoir son extrémité libre 13 s'étendant à l'entrée du tronçon borgne 9.2. L'élément de paroi de fond 12 est élastiquement déformable entre un état de repos dans lequel l'extrémité libre 13 est en saillie dans la rainure 9 pour s'opposer à la sortie de l'ergot 7 hors du tronçon borgne 9.2 et un état déformé dans lequel l'extrémité libre 13 est escamotée de la rainure 9 pour laisser passer l'ergot 7 du tronçon d'entrée 9.1 au tronçon borgne 9.2. L'élément de paroi de fond 12 forme ainsi un élément de paroi mobile.

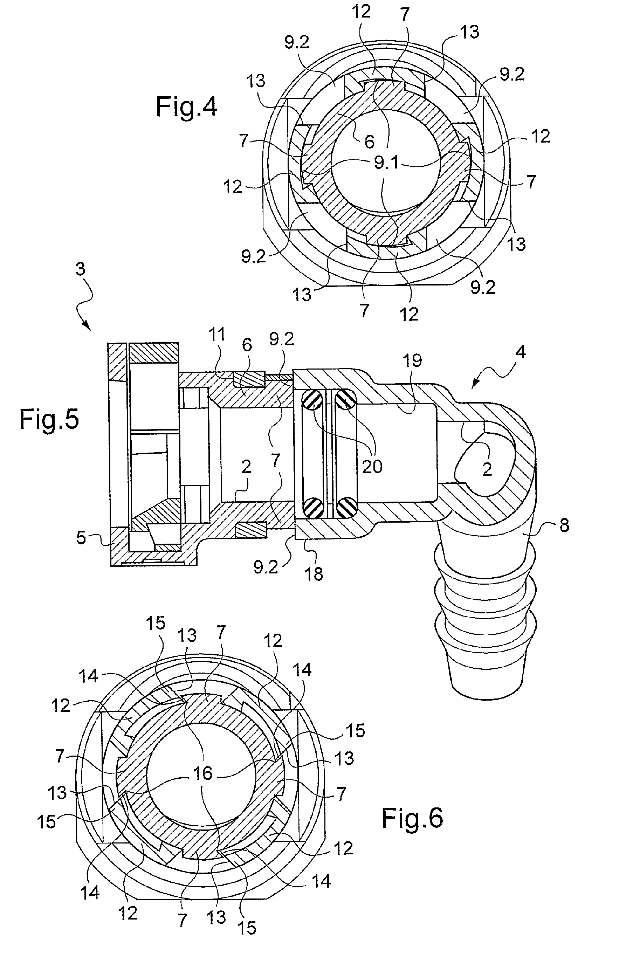

Le montage du raccord revient à engager axialement la portion d'extrémité 6 dans le chambrage 10 en engageant les ergots 7 dans les tronçons d'entrée 9.1 des rainures 9 (figure 4) puis à faire pivoter la deuxième partie 4 par rapport à la première partie 3 (dans le sens de la flèche P de la figure 3) pour faire pénétrer les ergots 7 dans les tronçons borgnes 9.2. Lors du passage des ergots 7 du tronçon d'entrée 9.1 au tronçon borgne 9.2, les ergots 7 déforment les éléments de paroi de fond 12 de leur état de repos à leur état déformé. Après le passage de l'ergot 7, chaque élément de paroi de fond 12 revient automatiquement dans son état de repos du fait de son élasticité propre. Les extrémités libres 13 des éléments de paroi de fond 12 sont alors au voisinage d'une face latérale 14 des ergots 7, s'opposant à tout déplacement de ceux-ci vers le tronçon d'entrée 9.1 (figure 3).

On notera que les ergots 7 ont une largeur égale à la distance séparant l'extrémité 13 d'une paroi terminale du tronçon borgne 9.2 de sorte que chaque ergot 7 est reçu quasiment sans jeu dans le tronçon borgne 9.2.

Dans la variante de la figure 5, la deuxième partie de corps 4 est coudée de telle manière que la portion d'extrémité mâle 8 fait un angle de 90° par rapport à la portion d'extrémité 18.

On comprend que l'agencement symétrique à 90° des ergots 7 et des rainures 9 autorise quatre orientations possibles des parties de corps l'une par rapport à l'autre, ce qui permet ici de choisir l'orientation du verrou de la première partie de corps 3 par rapport à la portion d'extrémité mâle 8 de la deuxième partie de corps 4 de manière à favoriser l'accessibilité au verrou en fonction de l'environnement du raccord.

Dans la variante de la figure 6, l'extrémité 13 des éléments de paroi de fond 12 et la face 14 des ergots 7 ont des formes complémentaires s'opposant à un déplacement de l'extrémité 13 vers la position escamotée. L'extrémité 13 a ici une partie biseautée 15 qui pénètre dans un renfoncement 16 de la face 14 à la base de l'ergot 7 de telle manière que lorsque la face 14 exerce un effort sur l'extrémité 13, la coopération de la partie biseautée 15 et du renfoncement 16 tend à maintenir l'élément de paroi de fond 12 dans son état de repos.

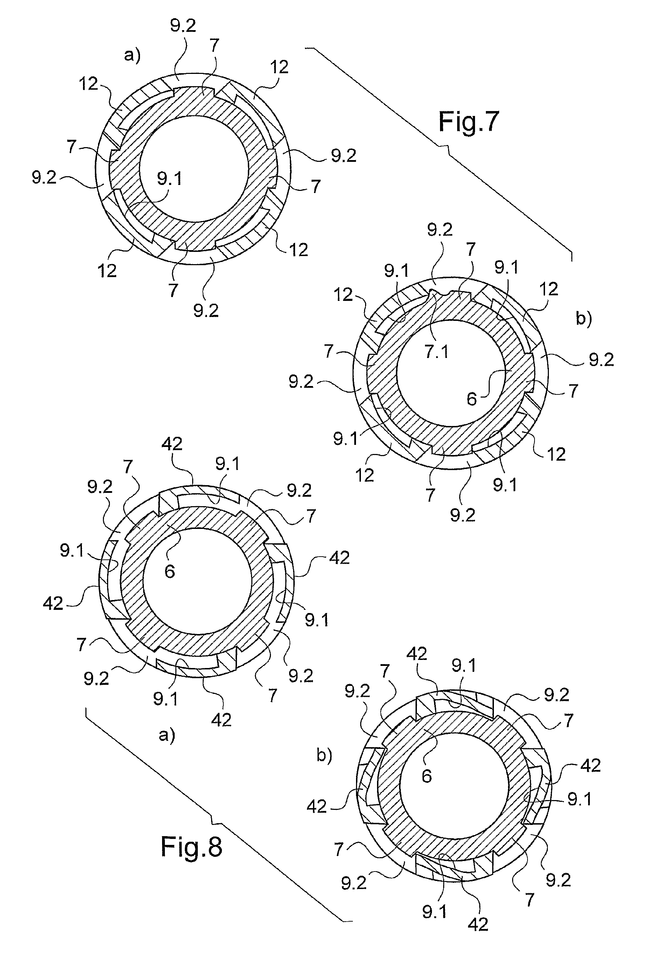

A la figure 7 est illustré un raccord analogue à celui représenté sur les figures 1 à 4 et qui a été soumis au procédé de l'invention selon un premier mode de mise en oeuvre. Dans cette mise en oeuvre, il est réalisé une déformation à chaud 7.1 d'au moins un des ergots 7 pour augmenter localement la hauteur de l'ergot 7 au niveau de la face 14 et empêcher l'ergot 7 de se soustraire à l'appui de l'extrémité 13 (figure 7.a, raccord avant déformation ; figure 7.b raccord après déformation).

A la figure 8 est illustré un raccord analogue à celui représenté sur les figures 1 à 4 sauf en ce que les rainures 9 sont dépourvues d'un élément de paroi de fond mobile (voir la figure 8.a). L'irréversibilité de la liaison à baïonnette n'est donc pas assurée par la structure du raccord. Ce raccord a donc été soumis au procédé de l'invention selon un deuxième mode de mise en oeuvre. Dans cette mise en oeuvre, il est réalisé une déformation locale à chaud de la paroi de fond 42 d'au moins une des rainures 9 à l'entrée du tronçon borgne 9.2 pour réduire localement la hauteur de la rainure 9 de sorte que l'ergot 7 soit plus haut que la rainure 9 à cet endroit et vienne buter contre la portion déformée de la paroi de fond. On empêche ainsi un déplacement de l'ergot 7 hors du tronçon borgne 9.2 de la rainure 9. La déformation à chaud immobilise ici l'ergot 7 dans le tronçon borgne 9.2 de la rainure 9 en éliminant des jeux de montage.

La déformation à chaud peut être réalisée par un faisceau laser ou un poinçon chauffé. La déformation peut également être réalisée à froid.

Bien entendu, l'invention n'est pas limitée aux modes de réalisations décrits mais englobe toute variante entrant dans le champ de l'invention telle que définie par les revendications.

En particulier, l'irréversibilité de la liaison à baïonnette peut être obtenue par d'autres moyens que ceux décrits et, par exemple, un verrou monté sur la partie de corps pourvue de la rainure pour être mobile transversalement dans la rainure.

Bien que dans les modes de réalisation décrits, l'élément de paroi de fond 12 forme l'élément de paroi mobile, ce dernier peut être constitué par une portion d'un des flancs de la rainure. L'élément de paroi mobile peut être articulé au chambrage et rappelé élastiquement en position en saillie par un ressort indépendant ou être mécaniquement maintenu dans sa position en saillie.

La déformation plastique peut être réalisée sur n'importe quelle partie du raccord du moment qu'elle est suffisante pour procurer l'irréversibilité de la liaison à baïonnette.

D'autres moyens de connexion sont utilisables et notamment des moyens de connexion instantanés ou non, des moyens à emmanchement à force ou clipsables, une rondelle dentée ou une pince d'accrochage... Le raccord peut comporter deux extrémités mâles ou deux extrémités femelles.

Le nombre et la position des ergots et des rainures peuvent être modifiés, par exemple en fonction du nombre d'orientations angulaires possibles qu'on souhaite avoir entre les parties de corps.

La liaison entre la première partie de corps et la deuxième partie de corps peut être réalisée comme ici en amont des éléments d'étanchéité 20 (par référence au sens d'introduction de l'extrémité de conduit dans le chambrage de la première portion d'extrémité) ou en aval de ces éléments d'étanchéité mais il est alors nécessaire de prévoir des éléments d'étanchéité supplémentaires entre la première partie de corps et la deuxième partie de corps.

## Revendications

1. Raccord comprenant un corps tubulaire (1) délimitant un canal (2) interne et comportant une première partie (3) et une deuxième partie (4) pourvues chacune de moyens de connexion (5, 8) du canal à un conduit, la première partie et la deuxième partie comportant des portions d'extrémité (6, 18) agencées pour permettre un engagement relatif solidarisant la première partie à la deuxième partie, **caractérisé en ce que** les portions d'extrémité sont pourvues d'éléments de fixation (7, 9) agencés pour définir une liaison baïonnette irréversible, la portion d'extrémité (6) de la première partie (3) comportant au moins un ergot (7) en saillie radiale et la portion d'extrémité (18) de la deuxième partie (4) comportant au moins une rainure (9) de réception de l'ergot comportant un tronçon d'entrée (9.1) débouchant dans un tronçon borgne (9.2) s'étendant selon une direction sensiblement circonférentielle du raccord, la rainure comportant un élément de paroi (12) mobile entre une position escamotée de la rainure pour laisser passer l'ergot du tronçon d'entrée au tronçon borgne et une position en saillie dans la rainure pour empêcher l'ergot de sortir du tronçon borgne, le raccord comportant des moyens de maintien de l'élément de paroi en position en saillie.

2. Raccord selon la revendication 1, dans lequel les moyens de maintien comprennent un moyen de rappel élastique de l'élément de paroi (12) dans sa position en saillie.

3. Raccord selon la revendication 2, dans lequel l'élément de paroi (12) est élastiquement déformable de sa position en saillie vers sa position escamotée.

4. Raccord selon la revendication 1, dans lequel la portion d'extrémité (6) de la première partie (3) est une partie mâle et l'ergot (7) s'étend radialement en saillie externe de la portion d'extrémité et la portion d'extrémité (8) de la deuxième partie (4) comporte une paroi délimitant un logement (10) de réception de la première partie, la rainure (9) étant formée dans ladite paroi du logement, le tronçon d'entrée (9.1) s'étendant selon une direction sensiblement axiale du logement et ayant une extrémité débouchant sur une face terminale (11) de la deuxième partie et une extrémité opposée débouchant dans le tronçon borgne (9.2).

5. Raccord selon la revendication 4, dans lequel la rainure (9) comporte une paroi de fond formant l'élément de paroi (12) mobile, la paroi de fond étant élastiquement déformable de sa position en saillie vers sa position escamotée.

6. Raccord selon la revendication 5, dans lequel la paroi de fond formant l'élément de paroi mobile (12) possède une extrémité fixe dans le tronçon d'entrée (9.1) et une extrémité libre voisine du tronçon borgne (9.2).

7. Raccord selon la revendication 6, dans lequel l'ergot (7) et l'extrémité libre (13) de la paroi de fond formant élément de paroi mobile (12) ont des formes complémentaires agencées de telle manière qu'un effort de l'ergot sur l'extrémité libre en direction du tronçon d'entrée (9.1) tend à maintenir la paroi de fond formant élément de paroi mobile en position en saillie.

8. Raccord selon l'une quelconque des revendications 1 à 7, dans lequel les portions d'extrémité (6, 8) comportent respectivement plusieurs ergots (7) et plusieurs rainures (9), les ergots et les rainures étant disposés symétriquement pour autoriser plusieurs positions angulaires d'engagement relatif des parties de corps (3, 4).

9. Raccord selon l'une quelconque des revendications 1 à 8, dans lequel l'élément de paroi mobile (12) en position en saillie est dimensionné pour maintenir l'ergot (7) contre une paroi terminale du tronçon borgne (9.2).

10. Procédé de renforcement de la liaison de deux parties de corps (3, 4) d'un corps tubulaire d'un raccord, le corps (1) délimitant un canal (2) interne et les parties étant pourvues chacune de moyens de connexion du canal à un conduit et comportant des portions d'extrémité (6, 18) agencées pour permettre un engagement relatif solidarisant la première partie à la deuxième partie, les portions d'extrémité étant pourvues d'éléments de fixation comportant respectivement au moins un ergot (7) en saillie radiale et au moins une rainure (9) pour recevoir l'ergot, la rainure comportant un tronçon d'entrée (9.1) débouchant dans un tronçon borgne (9.2) s'étendant selon une direction sensiblement circonférentielle du raccord, le procédé comprenant l'étape de déformer plastiquement l'un au moins des éléments de fixation pour bloquer l'ergot dans le tronçon borgne,, la rainure comportant un élément de paroi (12) mobile entre une position escamotée de la rainure (9) pour laisser passer l'ergot (7) du tronçon d'entrée (9.1) au tronçon borgne (9.2) et une position en saillie dans la rainure pour empêcher l'ergot de sortir du tronçon borgne, la déformation est réalisée pour s'opposer à un déplacement de l'élément de paroi mobile de sa position en saillie vers sa position escamotée.

11. Procédé selon la revendication 10, dans lequel la déformation est réalisée sur l'élément de paroi mobile (12).

12. Procédé selon la revendication 10, dans lequel la déformation est réalisée sur l'ergot (7).

13. Procédé selon la revendication 10, dans lequel la déformation immobilise l'ergot (7) dans le tronçon borgne (9.2) de la rainure (9) en éliminant des jeux de montage.

## Patentansprüche

1. Verbindung, umfassend ein rohrförmiges Gehäuse (1), das einen inneren Kanal (2) begrenzt und einen ersten Teil (3) und einen zweiten Teil (4) umfasst, die jeweils mit Verbindungsmitteln (5, 8) zum Verbinden des Kanals mit einer Leitung versehen sind, wobei der erste Teil und der zweite Teil Endabschnitte (6, 18) umfassen, die so ausgebildet sind, dass sie einen relativen Eingriff ermöglichen, der den ersten Teil mit dem zweiten Teil verbindet, **dadurch gekennzeichnet, dass** die Endabschnitte mit Befestigungselementen (7, 9) versehen sind, die so ausgebildet sind, dass sie eine irreversible Bajonettverbindung definieren, wobei der Endabschnitt (6) des ersten Teils (3) mindestens eine radial vorstehende Nase (7) umfasst und der Endabschnitt (18) des zweiten Teils (4) mindestens eine die Nase aufnehmende Nut (9) umfasst, die einen Eintrittsabschnitt (9.1) umfasst, der in einen Blindabschnitt (9.2) mündet, der sich im Wesentlichen in einer Umfangsrichtung der Verbildung erstreckt, wobei die Nut ein Wandelement (12) umfasst, das zwischen einer aus der Nut ausgerückten Position, in der die Nase vom Eintrittsabschnitt in den Blindabschnitt übergehen kann, und einer in die Nut vorstehenden Position beweglich ist, um zu verhindern, dass die Nase aus dem Blindabschnitt austritt, wobei die Verbindung Haltemittel zum Halten des Wandelements in vorstehender Position umfasst.

2. Verbindung nach Anspruch 1, wobei die Haltemittel ein elastisches Rückstellmittel zum elastischen Rückstellen des Wandelements (12) in seine vorstehende Position umfassen.

3. Verbindung nach Anspruch 2, wobei das Wandelement (12) von seiner vorstehenden Position in seine ausgerückte Position elastisch verformbar ist.

4. Verbindung nach Anspruch 1, wobei der Endabschnitt (6) des ersten Teils (3) ein männlicher Teil ist und sich die Nase (7) vom Endabschnitt radial nach außen vorstehend erstreckt und der Endabschnitt (8) des zweiten Teils (4) eine Wand umfasst, die eine Aufnahme (10) zur Aufnahme des ersten Teils begrenzt, wobei die Nut (9) in der genannten Wand der Aufnahme ausgebildet ist, wobei sich der Eintrittsabschnitt (9.1) in einer im Wesentlichen axialen Richtung der Aufnahme erstreckt und ein Ende hat, das auf einer Endfläche (11) des zweiten Teils mündet, sowie ein entgegengesetztes Ende, das in den Blindabschnitt (9.2) mündet.

5. Verbindung nach Anspruch 4, wobei die Nut (9) eine Bodenwand umfasst, die das bewegliche Wandelement (12) bildet, wobei die Bodenwand von ihrer vorstehenden Position in ihre ausgerückte Position elastisch verformbar ist.

6. Verbindung nach Anspruch 5, wobei die das bewegliche Wandelement (12) bildende Bodenwand ein festes Ende im Eintrittsabschnitt (9.1) sowie ein freies Ende nahe dem Blindabschnitt (9.2) umfasst.

7. Verbindung nach Anspruch 6, wobei die Nase (7) und das freie Ende (13) der das bewegliche Wandelement (12) bildenden Bodenwand komplementäre Formen haben, die derart ausgebildet sind, dass eine Kraft der Nase auf das freie Ende in Richtung des Eintrittsabschnitts (9.1) dazu neigt, die das bewegliche Wandelement bildende Bodenwand in vorstehender Position zu halten.

8. Verbindung nach einem der Ansprüche 1 bis 7, wobei die Endabschnitte (6, 8) mehrere Nasen (7) bzw. mehrere Nuten (9) umfassen, wobei die Nasen und die Nuten symmetrisch angeordnet sind, um mehrere Winkelpositionen eines relativen Eingriffs der Gehäuseteile (3, 4) zu gestatten.

9. Verbindung nach einem der Ansprüche 1 bis 8, wobei das bewegliche Wandelement (12) in vorstehender Position derart bemessen ist, dass die Nase (7) an einer Endwand des Blindabschnitts (9.2) gehalten wird.

10. Verfahren zum Verstärken der Verbindung von zwei Gehäuseteilen (3, 4) eines rohrförmigen Gehäuses einer Verbindung, wobei das Gehäuse (1) einen inneren Kanal (2) begrenzt und die Teile jeweils mit Verbindungsmitteln zum Verbinden des Kanals mit einer Leitung versehen sind und Endabschnitte (6, 18) umfassen, die so ausgebildet sind, dass sie einen relativen Eingriff gestatten, der den ersten Teil mit dem zweiten Teil verbindet, wobei die Endabschnitte mit Befestigungselementen versehen sind, die mindestens eine radial vorstehende Nase (7) bzw. mindestens eine Nut (9) umfassen, um die Nase aufzunehmen, wobei die Nut einen Eintrittsabschnitt (9.1) umfasst, der in einen Blindabschnitt (9.2) mündet, der sich im Wesentlichen in einer Umfangsrichtung der Verbindung erstreckt, wobei das Verfahren den Schritt des plastischen Verformens mindestens eines der Befestigungselemente umfasst, um die Nase in dem Blindabschnitt zu blockieren, wobei die Nut ein Wandelement (12) umfasst, das zwischen einer aus der Nut (9) ausgerückten Position, in der die Nase (7) vom Eintrittsabschnitt (9.1) in den Blindabschnitt (9.2) übergehen kann, und einer in die Nut vorstehenden Position beweglich ist, um zu verhindert, dass die Nase aus dem Blindabschnitt austritt, wobei die Verformung erfolgt, um sich einer Bewegung des beweglichen Wandelements von seiner vorstehenden Position in seine ausgerückte Position zu widersetzen.

11. Verfahren nach Anspruch 10, wobei die Verformung an dem beweglichen Wandelement (12) erfolgt.

12. Verfahren nach Anspruch 10, wobei die Verformung an der Nase (7) erfolgt.

13. Verfahren nach Anspruch 10, wobei die Verformung die Nase (7) in dem Blindabschnitt (9.2) der Nut (9) blockiert und dabei Montagespiele beseitigt werden.

## Claims

1. A coupling comprising a tubular body (1) defining an internal channel (2) and comprising a first body part (3) and a second body part (4) each provided with connector means (5, 8) for connecting the channel to a duct, the first and second body parts having end portions (6, 18) arranged to enable the first and second body parts to be secured to each other by relative engagement, the coupling being **characterized in that** the end portions are provided with fastener elements (7, 9) arranged to define an irreversible bayonet connection, the end portion (6) of the first part (3) including at least one radially projecting stud (7) and the end portion (18) of the second part (4) including at least one groove (9) for receiving the stud, the groove having an inlet segment (9.1) opening out into a blind segment (9.2) that extends in a substantially circumferential direction of the coupling, the groove having a wall element (12) that is movable between a retracted position outside the groove so as to allow the stud to pass from the inlet segment to the blind segment, and a projecting position inside the groove so as to prevent the stud from escaping from the blind segment, the coupling including holder means for holding the wall element in its projecting position.

2. A coupling according to claim 1, wherein the holder means comprise resilient return means for urging the wall element (12) into its projecting position.

3. A coupling according to claim 2, wherein the wall element (12) is elastically deformable from its projecting position towards its retracted position.

4. A coupling according to claim 1, wherein the end portion (6) of the first part (3) is a male part and the stud (7) extends radially, projecting outwards from the end portion, and the end portion (8) of the second part (4) includes a wall defining a housing (10) for receiving the first part, the groove (9) being formed in said wall of the housing, the inlet segment (9.1) extending in a substantially axial direction of the housing and having one end opening out into a terminal face (11) of the second part and an opposite end opening out into the blind segment (9.2).

5. A coupling according to claim 4, wherein the groove (9) has an end wall forming the movable wall element (12), the end wall being elastically deformable from its projecting position towards its retracted position.

6. A coupling according to claim 5, wherein the end wall forming the movable wall element (12) possesses a stationary end in the inlet segment (9.1) and a free end close to the blind segment (9.2).

7. A coupling according to claim 6, wherein the stud (7) and the free end (13) of the end wall forming the movable wall element (12) are of complementary shapes arranged in such a manner that a force from the stud on the free end towards the inlet segment (9.1) tends to hold the end wall forming the movable wall element in the projecting position.

8. A coupling according to any one of claims 1 to 7, wherein the end portions (6, 8) comprise respectively a plurality of studs (7) and a plurality of grooves (9), said studs and grooves being arranged symmetrically so as to allow a plurality of angular positions for mutual engagement of the body parts (3, 4).

9. A coupling according to any one of claims 1 to 8, wherein the movable wall element (12) in the projecting position is dimensioned so as to hold the stud (7) against a terminal wall of the blind segment (9.2).

10. A method of reinforcing the connection between two body parts (3, 4) of a tubular body of a coupling, the body (1) defining an internal channel (2) and each of the body parts being provided with means for connecting the channel to a duct and each having a respective end portion (6, 8) arranged to enable the first and second body parts to be secured to each other by relative engagement, the end portions being provided with fastener elements comprising respectively at least one radially projecting stud (7) and at least one groove (9) for receiving the stud, the groove including an inlet segment (9.1) opening into a blind segment (9.2) extending in a substantially circumferential direction of the coupling, the method comprising the step of plastically deforming at least one of the fastener elements in order to block the stud in the blind segment,the groove including a wall element (12) that is movable between a retracted position outside the groove (9) for allowing the stud (7) to pass from the inlet segment (9.1) to the blind segment (9.2) and a projecting position inside the groove to prevent the stud from escaping from the blind segment, the deformation being performed to oppose movement of the movable wall element from its projecting position towards its retracted position.

11. A method according to claim 10, wherein the deformation is performed on the movable wall element (12).

12. A method according to claim 10, wherein the deformation is performed on the stud (7).

13. A method according to claim 10, wherein the deformation prevents the stud (7) from moving in the blind segment (9.2) of the groove (9) by eliminating assembly clearances.
